# DEMANDE DE BREVET EUROPEEN

(11) **EP 0 521 772 A1**
(43) Date de publication de la demande: **07.01.1993**
(21) Numéro de dépôt: 92401857.5
(22) Date de dépôt: 30.06.1992
(51) Int. Cl.: C07F 7/10, C04B 35/58

(54) **Procédé de préparation de céramiques en nitrure de bore et de leurs précurseurs à partir de dérivés de l'hydrazine et les précurseurs ainsi mis en oeuvre**

(30) Priorité: 02.07.1991 FR 9108222
(71) Demandeur: ELF ATOCHEM S.A., F-92800 Puteaux (FR)
(72) Inventeur: Majoral, Jean-Pierre, F-31520 Ramonville (FR); Brodie, Nancy, F-31400 Toulouse (FR); Caminade, Anne-Marie, F-31520 Ramonville (FR)
(74) Mandataire: Rochet, Michel

(57) **Abrégé**

L'invention a pour objet un procédé de préparation de céramiques en nitrure de bore et leurs précurseurs.

Ces produits sont obtenus par réaction d'un dérivé lithié de l'hydrazine avec un trihalogénure de bore, suivie de la réaction du produit obtenu précédemment avec de l'ammoniac.

## Description

L'invention a pour objet un procédé de préparation de céramiques bore/azote et de leurs précurseurs à partir de dérivés de l'hydrazine.

Elle concerne également les précurseurs de céramiques formés dans la mise en oeuvre de ce procédé.

Le procédé conforme à l'invention consiste :
a) à faire réagir un ou plusieurs composés de formule 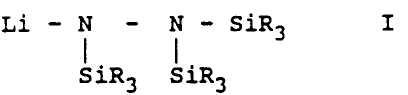 avec un trihalogénure de bore BX₃ II
   pour former un dérivé halogéné de l'hydrazine silylée.
b) à faire réagir le produit de réaction de la 1ère étape avec l'ammoniac jusqu'à obtention d'un précurseur
c) à pyrolyser le composé obtenu sous c) et recueillir un produit contenant du nitrure de bore.

Dans les formules I et II les symboles peuvent avoir les significations suivantes :
- les symboles R, qui peuvent être identiques ou différents, représentent des radicaux organiques renfermant jusqu'à 12 atomes de carbone et pouvant notamment être choisis parmi les radicaux alkyle, cycloalkyle et aryle; ces radicaux sont avantageusement choisis parmi les radicaux alkyle ayant 1 à 4 atomes de carbone, et notamment le radical méthyle.
- le symbole X représente un atome d'halogène et notamment un atome de chlore et de brome.

La première étape du procédé consiste à faire réagir le dérivé lithié de l'hydrazine I avec un trihalogénure de bore II.

D'une manière générale le rapport molaire II/I est compris entre 1 et 2 (inclus).

La préparation du dérivé lithié de formule I est connue et ne constitue pas en elle-même un objet de l'invention. On peut ainsi à obtenir ce dérivé en suivant la technique décrite par Wiberg et Veith [Chem. Ber. 104,3176.3190 (1971)]

Cette réaction, qui s'effectue avec départ de Li X, peut être conduite à une température pouvant être comprise entre 0 et 50°C et de préférence entre 0 et 25°C et généralement en milieu solvant tel que, par exemple, le pentane ou l'éther diéthylique.

Au cours de cette étape, on forme des silylhydrazines halogénées de formule : 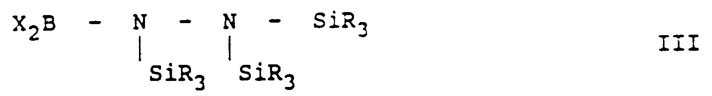
(caractérisation RMN et IR), qui sont des produits stables à température ambiante sous atmosphère inerte.

Les silylhydrazines de formule III constituent un autre objet de l'invention.

La deuxième étape du procédé consiste à faire réagir le produit réactionnel de la première étape avec l'ammoniac. Cela signifie qu'on peut, dans le procédé de l'invention, isoler ou non les silylhydrazines de formule III.

D'une manière générale, on met en oeuvre au moins 3 moles du dérivé halogéné de l'hydrazine silylée et notamment du composé de formule III (isolé ou calculé) pour une mole de NH₃ (l'excès molaire n'excédant en général pas 10% ) et on Peut ainsi obtenir une borazine de formule : 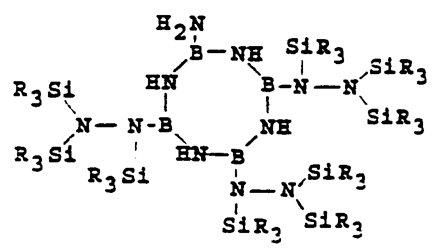
dans laquelle les symboles R possèdent la signification donnée précédemment.

Cette deuxième étape s'effectue en général en milieu solvant tel que pentane, toluène ou octane et à une température pouvant être comprise entre 0 et 100°C.

Les borazines de formule IV constituent également l'un des objets de l'invention.

Ces produits sont en général des substances huileuses, stables à l'air à température ambiante et sont solubles dans divers solvants tels que l'octane, le pentane, le toluène.

Les composés de formule IV peuvent être soumis à une pyrolyse à une température généralement comprise entre 900 et 1500°C et de préférence entre 900 et 1200°C.

Il est cependant avantageux de les traiter préalablement à la pyrolyse, dans le but notamment d'améliorer le rendement pyrolytique.

On peut ainsi faire précéder la pyrolyse d'un prétraitement sous pression réduite (par exemple pression réduite à 1 mm de mercure) à une température pouvant être comprise entre 120 et 250°C, de préférence entre 150 et 220°C, pendant quelques dizaines de minutes à quelques heures, ce traitement s'accompagnant d'un départ d'hydrazine silylée (R₃ Si NH NH₂).

On peut également ajouter à une mole de composé de formule IV un trihalogénure de bore, de préférence BCl₃, en général environ 2 moles, cette addition se faisant avantageusement à basse température, par exemple autour de 0°C, dans un solvant à cette température, tel que le pentane, traitement qui peut durer quelques dizaines de minutes à quelques heures.

On obtient ainsi un solide blanc (Si), également soluble dans les solvants mentionnés plus haut, lequel solide étant ensuite soumis à pyrolyse.

Ce solide peut également, avant pyrolyse, être chauffé à une température comprise en général entre 100 et 150°C pendant 30 mn à 5 heures environ et se transformer en solide (S₂) également soluble comme indiqué précédemment.

Le solide blanc (S₂) peut également être chauffé à plus haute température, par exemple entre 150 et 250°C pendant quelques minutes à quelques heures, et se transformer en solide insoluble (S₃).

Les divers traitements mentionnés plus haut ont, ainsi qu'il a été indiqué, un effet sur les propriétés physiques des précurseurs de céramiques. Ils ont également un effet sur le rendement pyrolytique qui peut ainsi aller de 15% pour S₁ à plus de 25% pour S₂.

La pyrolyse peut être réalisée à une température pouvant aller de 800 à 1500°C et de préférence de 900 à 1200°C. Cette opération est avantageusement effectuée sous atmosphère d'argon ou, mieux encore, sous atmosphère d'ammoniac.

L'exemple suivant illustre l'invention.

### Exemple

1°) On dissout 2,7 g de tris(triméthylsilyl)hydrazine dans 40 ml de pentane à température ambiante et refroidit la solution à 0°C.
   On introduit dans cette solution refroidie 4,5 ml d'une solution 2,5 M de n butyllithium dans l'hexane.
   L'ensemble est ramené à température ambiante et est maintenu à cette température pendant 3 heures.
   On forme ainsi le dérivé lithié Li (SiMe₃) N-N (SiMe₃)₂(A).
2°) A la solution de dérivé lithié (A) on ajoute une solution de 1,26 g de BCl₃ dans 10 ml de pentane. Un précipité blanc se forme immédiatement. Le mélange est maintenu pendant 1 heure à température ambiante puis filtré. On élimine ainsi 0,44 g de LiCl. On élimine le solvant et recueille 5,0 g d'un solide blanc huileux, répondant à la formule Cl₂B (SiMe₃) N-N(SiMe₃)₂(B). Le produit est cristallisé par addition d'une faible quantité de pentane et refroissement à -78 °C.
3°) On dissout à température ambiante 1, 6 g de (B) dans 20 ml de pentane et refroidit à 0°C. On fait barboter dans cette solution de l'ammoniac pendant 15 mn et maintient sous agitation pendant 15 mn supplémentaires à température ambiante. La solution est filtrée (élimination de 0,5g de NH₄ Cl). Le filtrat donne, après élimination du solvant, un solide blanc huileux (C₁).

Les analyses ¹HRMN , ¹¹BRMN et IR ainsi que le calcul massique permet d'attribuer à ce produit la formule IV, dans laquelle R représente le radical methyle.

Le solide huileux précité est chauffé pendant 2 heures à 150°C sous léger courant d'argon. Le produit obtenu (C₂) fond à 80°C et a perdu environ 10 % de son poids. Après refroidissement, on obtient une huile claire incolore. Après chauffage à 220°C pendant 5 heures sous pression réduite à 1 mm de mercure, on obtient un solide blanc collant après perte de poids de 60% (C₃).

Les spectres RMN et IR de ces différents produits correspondent tous à la formule IV (R = méthyle).

La pyrolyse de C₂ (à 1010°C - pendant 8 heures sous corant d'ammoniac) conduit à du nitrure de bore avec un rendement de 15%.

La pyrolyse de C₃ (à 1010°C - pendant 8 heures sous courant d'ammoniac) conduit à du nitrure de bore avec un rendement de 25%.

## Revendications

**1)** Procédé de préparation de céramiques en nitrure de bore, caractérisé en ce qu'il consiste :
a) à faire réagir un ou plusieurs composés de formule 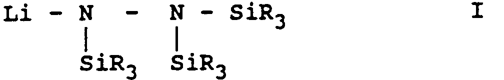 avec un trihalogénure de bore BX₃ II
pour former un dérivé halogéné de l'hydrazine silylée.
b) à faire réagir le produit de réaction de la première étape avec de l'ammoniac jusqu'à obtention d'un précurseur.
c) à pyrolyser le précurseur obtenu sous c/ et à recueillir un produit contenant du nitrure de bore, les symboles utilisés dans les formules I et II ayant les significations suivantes :
- les symboles R, qui peuvent être identiques ou différents, représentent des radicaux organiques renfermant jusqu'à 12 atomes de carbone tels que des radicaux alkyle, cycloalkyle ou aryle.
- le symbole X représente un atome d'halogène et notamment brome ou chlore.

**2)** Procédé selon la revendication 1, caractérisé en ce que, au cours de la 1° étape, il se forme une silylhydrazine de formule : 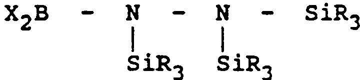 formule dans laquelle les symboles R et X possèdent la signification donnée dans la revendication 1.

**3)** Procédé selon l'une quelconque des revendications 1 ou 2, caractérisé en ce que, au cours de la 2° étape, il se forme une borazine de formule IV 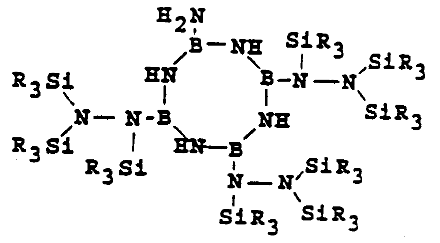 dans laquelle les symboles R possèdent la signification donnée dans la revendication 1.

**4)** Procédé selon l'une quelconque des revendications 1 à 3, caractérisé en ce que, dans la première étape, le rapport molaire II/I est compris entre 1 et 2 (inclus).

**5)** Procédé selon l'une quelconque des revendications 1 à 4, caractérisé en ce que dans la première étape, la réaction est conduite en milieu solvant à une température comprise entre 0 et 50°C.

**6)** Procédé selon l'une quelconque des revendications 1 à 5, caractérisé en ce que, dans la 2° étape, on met en oeuvre au moins trois moles du dérivés halogéné de l'hydrazine silylée par mole d'ammoniac.

**7)** Procédé selon l'une quelconque des revendications 1 à 6, caractérisé en ce que la 2° étape s'effectue en milieu solvant et à une température comprise entre 0 et 100°C.

**8)** Procédé selon l'une quelconque des revendications 1 à 7, caractérisé en ce que la pyrolyse est conduite à une température comprise entre 900 et 1500°C.

**9)** Procédé selon la revendication 8, caractérisé en ce que la pyrolyse est conduite en atmosphère d'argon ou d'ammoniac.

**10)** Procédé selon l'une quelconque des revendications 1 à 9, caractérisé en ce que la pyrolyse est précédée d'un ou plusieurs traitements thermiques du précurseur formé au cours de la 2° étape, à une température pouvant être comprise entre 120 et 250°C.

**11)** Les silylhydrazines de formule III.

**12)** Les borazines de formule IV.
